# EUROPEAN PATENT APPLICATION

(11) **EP 3 319 007 A1**
(43) Date of publication of application: **09.05.2018**
(21) Application number: 17199639.0
(22) Date of filing: 02.11.2017
(51) Int. Cl.: G06F 21/84, G06F 21/62, G09C 5/00

(54) **TEXT OBFUSCATION**

(30) Priority: 02.11.2016 US 201615342097
(71) Applicant: BlackBerry Limited, Waterloo, ON N2K 0A7 (CA)
(72) Inventor: KOMINAR, Jeremy Lawson, Waterloo, Ontario N2K 0A7 (CA)
(74) Representative: Hanna Moore + Curley

(57) **Abstract**

Text may be obfuscated by manipulating (pre-processing) the text to, thereby, generate obfuscated text before presenting the obfuscated text on the display of a computing device. The manipulation of the text may obfuscate the text in such a manner that the meaning of the text is clear only to the reader that understands the manner of obfuscation. The text may be rasterized and manipulated to have a greater height. The rasterized text may be further manipulated to have a decreased width. The obfuscated text may be scrolled across a display.

## Description

### FIELD

The present application relates generally to text obfuscation and, more specifically, to implementing such obfuscation through rasterization, height increasing and width reduction.

### BACKGROUND

Occasionally, there may be times during which a user of a mobile device may wish to view sensitive or private information on the mobile device in a public place. Currently, while the screen of the mobile device is on and displaying content, other people around the user can view the content.

### SUMMARY

Accordingly, there is provided a method, computing device and computer program as detailed in the claims that follow.

### BRIEF DESCRIPTION OF THE DRAWINGS

Reference will now be made, by way of example, to the accompanying drawings which show example implementations; and in which:
FIG. 1 illustrates an example of a computing device that may carry out aspects of the present disclosure;
FIG. 2 illustrates, in a plan view, sample text presented, in a conventional manner on a display of the computing device of FIG. 1;
FIG. 3 illustrates, in a plan view, sample text presented, in a stretched and compressed manner on the display of the computing device of FIG. 1, in accordance with aspects of the present application;
FIG. 4 illustrates example steps in a method of obfuscating text in accordance with aspects of the present application;
FIG. 5 illustrates, in an end-on perspective view, the stretched and compressed sample text of FIG. 3;
FIG. 6 illustrates, in an end-on perspective view, some stretched and compressed sample text arranged to scroll across the display responsive to tilting of the computing device, in accordance with aspects of the present application;
FIG. 7 illustrates, in an end-on perspective view, some stretched and compressed sample text arranged to scroll across the display responsive to input received at user interface buttons provided on the computing device, in accordance with aspects of the present application;
FIG. 8 illustrates, in a plan view, some stretched and compressed sample text arranged to scroll across the display and briefly, at a particular location on the display, decompress, in accordance with aspects of the present application; and
FIG. 9 illustrates, in an end-on perspective view, some stretched and compressed sample text arranged to scroll across the display, with the display arranged to promote appearance of moire patterns in accordance with aspects of the present application.

### DETAILED DESCRIPTION

Text may be obfuscated by manipulating (e.g., pre-processing) the text to, thereby, generate obfuscated text before presenting the obfuscated text on the display of a computing device. The manipulation of the text may obfuscate the text in such a manner that the meaning of the text is clear only to the reader that understands the manner of obfuscation. The text may be rasterized, manipulated to have a greater height (stretched). The rasterized text may also be manipulated to have a decreased width (compressed). The obfuscated text may be scrolled across a display.

According to an aspect of the present disclosure, there is provided a method of obfuscating text. The method includes rasterizing the text, to produce rasterized text having a height and a width, altering the rasterized text by increasing the height without increasing the width and arranging presentation of the altered text on a display. In other aspects of the present application, a computing device including a processor is provided for carrying out this method and a computer readable medium is provided for adapting a processor in a computing device to carry out this method.

Other aspects and features of the present disclosure will become apparent to those of ordinary skill in the art upon review of the following description of specific implementations of the disclosure in conjunction with the accompanying figures.

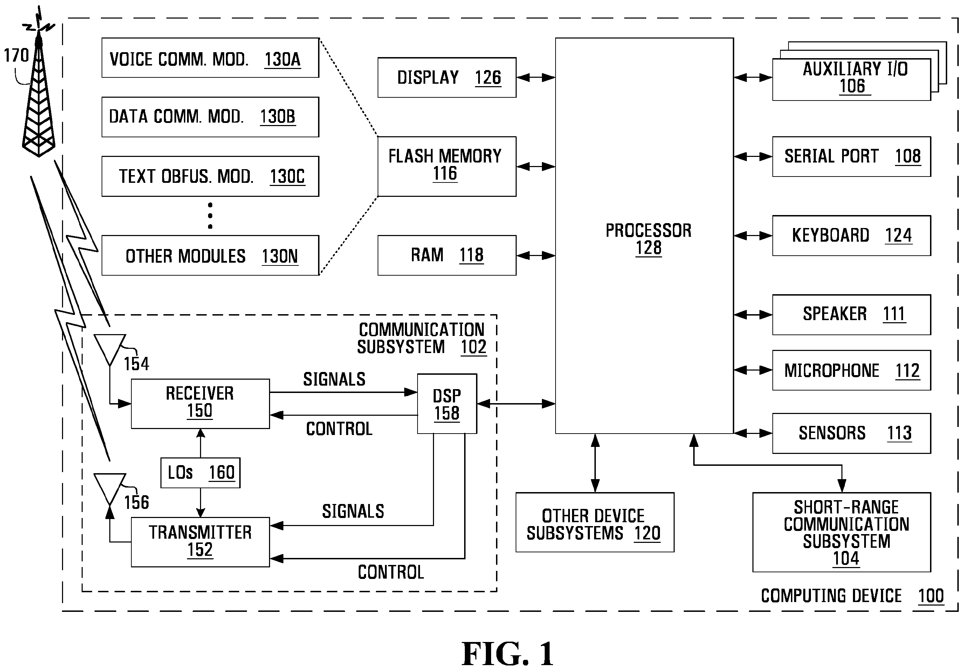

FIG. 1 illustrates a computing device 100 as an example of an electronic device that may carry out aspects of the present disclosure. The computing device 100 may comprise a housing, an input device (e.g., a keyboard 124 having a plurality of keys) and an output device (e.g., a display 126), which may comprise a full graphic, or full color display employing a display technology. Suitable display technologies include Liquid Crystal Display (LCD), Electroluminescent display (ELD), Electronic paper, E Ink, Plasma display panel (PDP), High-Performance Addressing display (HPA), Thin-film transistor display (TFT), Organic light-emitting diode display (OLED), Surface-conduction electron-emitter display (SED), Field emission display (FED), Laser TV, Carbon nanotubes, Quantum dot display, Interferometric modulator display (IMOD) and Digital microshutter display (DMS). In some embodiments, the display 126 may comprise a touchscreen display. In other embodiments, the display may involve projection of light onto a surface. In such embodiments, the keyboard 124 may comprise a virtual keyboard. Other types of output devices may alternatively be utilized. A processing device (a microprocessor 128) is shown schematically in FIG. 1 as coupled between the keyboard 124 and the display 126. The microprocessor 128 controls the operation of the display 126, as well as the overall operation of the computing device 100, in part, responsive to actuation of the keys on the keyboard 124 by a user.

Examples of computing devices include devices that may be called traditional computing devices (e.g., desktop computers and laptop computers). Further examples of computing devices include devices that may be called mobile devices (e.g., tablet computers, smartphones, wearable devices such as smart watches, game consoles, robots, autonomous vehicles and cameras). Further examples of computing devices include vehicles (including without limitation motor vehicles such as cars and buses, rail vehicles such as trains, watercraft such as ships and boats, aircraft such as planes and flying drones, and spacecraft such as rockets and satellites, etc.). The above are non-exhaustive examples of computing devices. Computing devices as used herein may also include after-arising technology.

The housing may be elongated vertically, or may take on other sizes and shapes (including clamshell housing structures). In the case in which the keyboard 124 includes keys that are associated with at least one alphabetic character and at least one numeric character, the keyboard 124 may include a mode selection key, or other hardware or software, for switching between alphabetic entry and numeric entry.

In addition to the microprocessor 128, other optional parts of the computing device 100 are shown schematically in FIG. 1. These may include a communications subsystem 102, a short-range communications subsystem 104, the keyboard 124 and the display 126. The computing device 100 may further include other input/output devices, such as a set of auxiliary I/O devices 106, a serial port 108, a speaker 111, a microphone 112 and various sensors 113. The various sensors 113 may include, for example, accelerometers and gyroscopes. The computing device 100 may further include memory devices including a flash memory 116 and a Random Access Memory (RAM) 118 and various other device subsystems 120.

The computing device 100 may comprise a two-way radio frequency (RF) communication device having voice and/or data communication capabilities. In addition, the computing device 100 may have the capability to communicate with other computer systems via the Internet.

Operating system software executed by the microprocessor 128 may be stored in a computer readable medium, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 128, in addition to its operating system functions, enables execution of software applications on the computing device 100. A set of software applications that control basic device operations, such as a voice communications module 130A and a data communications module 130B, may be installed on the computing device 100 during manufacture. A text obfuscation module 130C may also be installed on the computing device 100 during manufacture, to implement aspects of the present disclosure. As well, additional software modules, illustrated as other software modules 130N, which may comprise, for instance, a personal information manager (PIM) application, may be installed during manufacture. The PIM application may be capable of organizing and managing data items, such as e-mail messages, calendar events, voice mail messages, appointments and task items. The PIM application may also be capable of sending and receiving data items via a wireless carrier network 170 represented by a radio tower. The data items managed by the PIM application may be seamlessly integrated, synchronized and updated via the wireless carrier network 170 with the device user's corresponding data items stored or associated with a host computer system.

Communication functions, including data and, optionally, voice communications, are performed through the communication subsystem 102 and, possibly, through the short-range communications subsystem 104. The communication subsystem 102 includes a receiver 150, a transmitter 152 and one or more antennas, illustrated as a receive antenna 154 and a transmit antenna 156. In addition, the communication subsystem 102 also includes a processing module, such as a digital signal processor (DSP) 158, and local oscillators (LOs) 160. The specific design and implementation of the communication subsystem 102 is dependent upon the communication network in which the computing device 100 is intended to operate. For example, the communication subsystem 102 of the computing device 100 may be designed to operate with the General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), Long Term Evolution (LTE), etc. Other types of data and voice networks, both separate and integrated, may also be utilized with the computing device 100.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in GPRS networks, network access is associated with a subscriber or user of a device. A GPRS device therefore uses a subscriber identity module, commonly referred to as a Subscriber Identity Module (SIM), in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the computing device 100 may send and receive communication signals over the wireless carrier network 170. Signals received from the wireless carrier network 170 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the wireless carrier network 170 are processed (e.g., modulated and encoded) by the DSP 158 and are then provided to the transmitter 152 for digital to analog conversion, frequency up conversion, filtering, amplification and transmission to the wireless carrier network 170 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 102 and is input to the microprocessor 128. The received signal is then further processed by the microprocessor 128 for output to the display 126, or alternatively to some auxiliary I/O devices 106. A device user may also compose data items, such as e-mail messages, using the keyboard 124 and/or some other auxiliary I/O device 106, such as a touchpad, a rocker switch, a thumb-wheel, a trackball, a touchscreen, or some other type of input device. The composed data items may then be transmitted over the wireless carrier network 170 via the communication subsystem 102.

In an optional voice communication mode, overall operation of the device is substantially similar to the data communication mode, except that received signals are output to the speaker 111, and signals for transmission are generated by a microphone 112. Alternative voice or audio I/O subsystems, such as a voice message recording subsystem, may also be implemented on the computing device 100. In addition, the display 126 may also be utilized in voice communication mode, for example, to present the identity of a calling party, the duration of a voice call, or other voice call related information.

The short-range communications subsystem 104 enables communication between the computing device 100 and other proximate systems or devices, which need not necessarily be similar devices. For example, the short-range communications subsystem may include an infrared device and associated circuits and components, or a Bluetooth™ communication module to provide for communication with similarly-enabled systems and devices, or a near field communication (NFC) module, etc.

In overview, it is proposed herein to obfuscate text by manipulating (e.g., pre-processing) the text to, thereby, generate obfuscated text before presenting the obfuscated text on the display 126 of the computing device 100. The manipulation of the text may obfuscate the text in such a manner that the meaning of the text is clear only to the reader that understands the manner of obfuscation.

Notably, the term "text" may refer, for example, to data representing one or more characters in any alphabet. That is, the characters may originate in any language. Furthermore, characters that do not form part of the alphabet of any language may also be considered to be text, such as characters known as emoji, ideograms, smiley faces and emoticons.

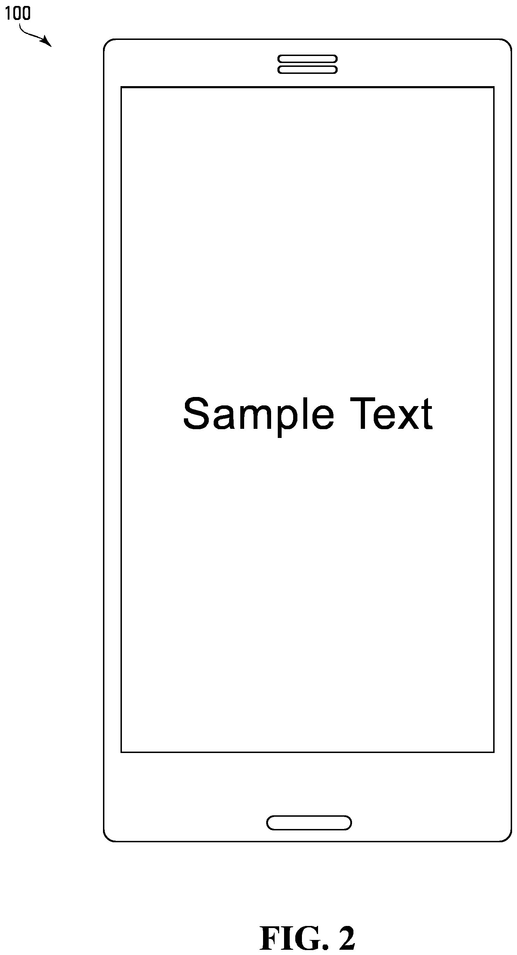

FIG. 2 illustrates, in a plan view, the computing device 100 of FIG. 1 with sample text presented, in a conventional manner, on the display 126.

The computing device 100 may be configured to manipulate various dimensions of a passage of text such that the text is presented on the display 126, e.g., as taller and narrower text. In this manner, the passage of text may be considered to have been presented in an obfuscated form.

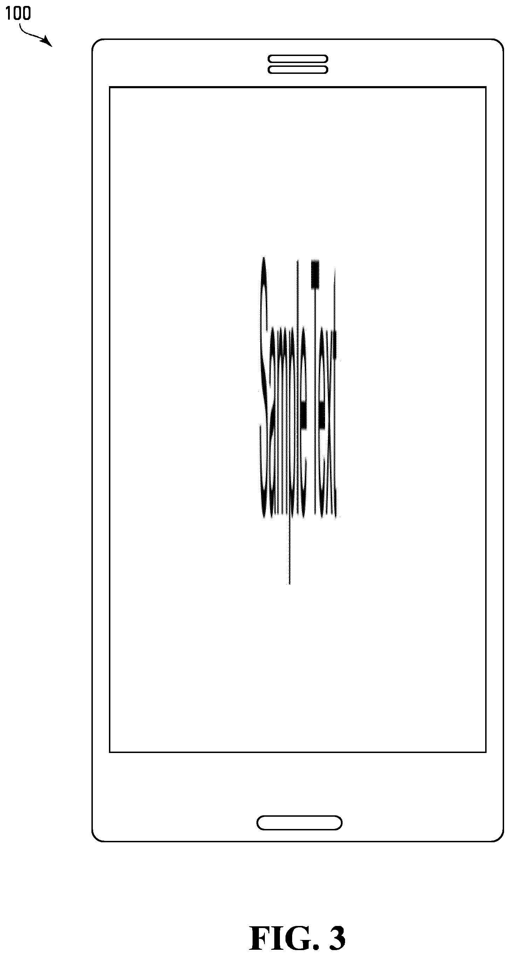

FIG. 3 illustrates, in a plan view, the computing device 100 of FIG. 2 with the sample text familiar from FIG. 2 presented in an obfuscated (height-increased and width-decreased) manner on the display 126, in accordance with aspects of the present application.

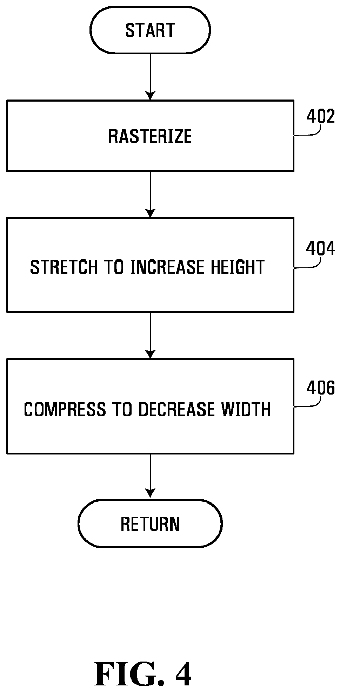

To progress from the text in FIG. 2 to the text in FIG. 3, it proposed herein that the microprocessor 128 be arranged to rasterize (step 402, FIG. 4) the text. Rasterizing generally refers to the process of turning vectors, or text layers, or layer effects, or any other kind of graphics, into a simple bitmap image made of pixels.

To understand what it means to rasterize the text, it is helpful to consider the manner in which text in a particular font is described, from the perspective of a computer. A letter in a particular font, such as a TrueType™ font, may be considered to be defined in terms of a set of vectors. Conveniently, at least for some applications, a letter in a particular vector-defined font may be scaled larger or smaller, while retaining subjectively crisp edges.

Once a letter has been rasterized, the letter may be defined as an image made of pixels, often called a bitmap image.

In contrast to the retention of subjectively crisp edges that occurs when vector-defined fonts are scaled larger, it is known that when a rasterized letter is scaled to a larger size, edges of the letter become subjectively less crisp. In the language of the art, it may be said that "artifacts" appear at the edges. It may be considered that one of the consequences of rasterizing text is a loss of definition.

A benefit of rasterizing the text is realized in the next steps, wherein the text is manipulated, that is, specific dimensions of the text are altered, while leaving other dimensions unaltered.

In one manipulation, the microprocessor 128 acts to increase the height (stretch, step 404, FIG. 4) of the text. In one example, increasing the height of the text may be considered to involve proportionally increasing the height of each character in the text. As discussed hereinbefore, such height-increasing manipulation can lead to the appearance of artifacts. In the present application, wherein obfuscation is desirable, the artifacts are beneficial.

In another optional manipulation, the microprocessor 128 acts to manipulate (compress, step 406, FIG. 4) the text to reduce the width of the text. In one example, decreasing the width of the text may be considered to involve proportionally decreasing the width of each character in the text, including any spaces.

Notably, sans serif fonts may be considered particularly well suited to the form of obfuscation that relies on height increasing (step 404) and width decreasing (step 406).

Notably, although the performance of the width-decreasing step (step 406) is presented as occurring after the performance of the height-increasing step (step 404), it should be clear that the order of the performance of these steps may be changed without having an impact on the manner in which aspects of the present application operate. Indeed, the obfuscation achieved through the use of the height-increasing step (step 404) may be suitable, even without the width-decreasing step (step 406).

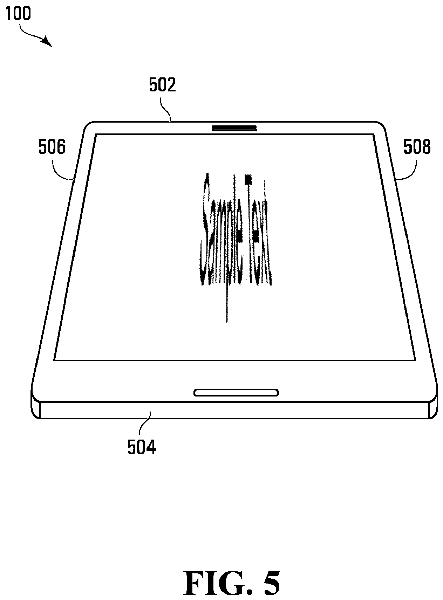

In FIG. 5, a top side 502, a bottom side 504, a left side 506 and a right side 508 of the computing device 100 are labeled. The obfuscated text on the display 126 may be considered to become more easily readable by the viewer responsive to the top side 502 of the display and/or computing device 100 being tilted away from the viewer, as illustrated in FIG. 5. As a consequence of tilting the top side 502 of the display and/or computing device 100 away from the viewer, the bottom side 504 of the display and/or computing device 100 is tilted toward the viewer.

Conveniently, while tilting the display and/or computing device 100, the viewer reduces a surface area of the display 126 that may be viewed by a "shoulder surfer."

A passage of text that is longer than that which may be comfortably fit in the width of the display 126, even after width decreasing (step 406), may be presented in a manner that allows the text to be scrolled across the display 126, for example, in a stock ticker fashion.

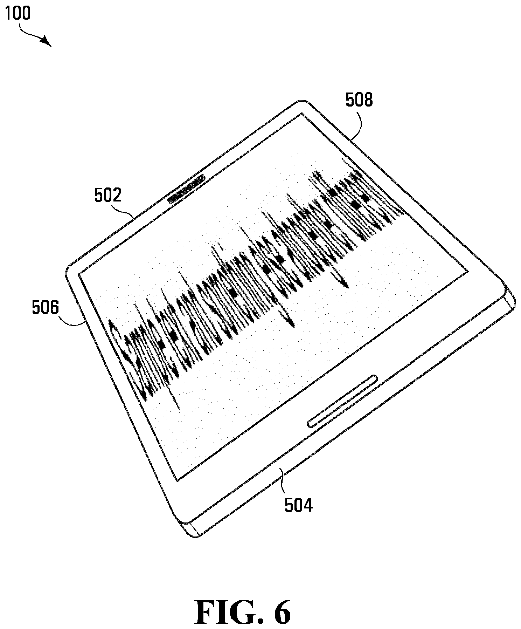

The direction and speed of the scrolling text may be controlled through manipulation of the display and/ or computing device 100 in space. Responsive to sensing, for example by the accelerometers and gyroscopes 113, that the display and/ or computing device 100 has been tilted such the left side 506 of the display and/ or computing device 100 is lower than the right side 508 of the display and/ or computing device 100 (as illustrated in FIG. 6), the microprocessor 128 may arrange scrolling of the passage of height-increased and width-decreased text from the right side 508 toward the left side 506.

Alternatively, responsive to sensing, for example by the accelerometers and gyroscopes 113, that the computing device 100 has been tilted such the right side 508 of the display and/ or computing device 100 is lower than the left side 506 of the display and/ or computing device 100, the microprocessor 128 may arrange scrolling of the passage of height-increased and width-decreased text from the left side 506 toward the right side 508.

Furthermore, the speed of the scrolling text may be controlled through manipulation of the computing device 100 in space. For smaller (e.g., relative to a threshold) tilts, the microprocessor 128 may arrange that the rate at which the passage of height-increased and width-decreased text scrolls across the display 126 to be relatively low. For larger (e.g., relative to a threshold) tilts, the microprocessor 128 may arrange that the rate at which the passage of height-increased and width-decreased text scrolls across the display 126 to be relatively high.

Scrolling of the passage of height-increased and width-decreased text may be, for another example, controlled through the use, by the viewer, of user interface buttons presented on a touch-sensitive screen used for the display 126.

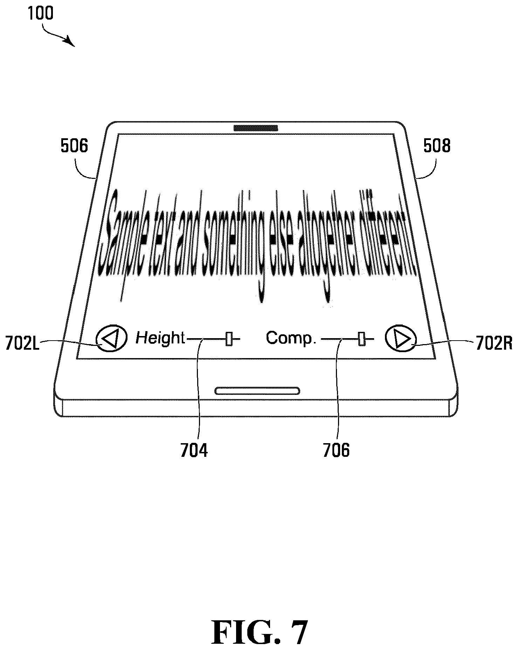

In view of FIG. 7, responsive to sensing that the viewer has pressed on a left user interface button 702L, the microprocessor 128 may arrange scrolling of the passage of height-increased and width-decreased text from the right side 508 toward the left side 506. Similarly, responsive to sensing that the viewer has pressed on a right user interface button 702R, the microprocessor 128 may arrange scrolling of the passage of height-increased and width-decreased text from the left side 506 toward the right side 508.

Further user interface controls are contemplated. For one example, a height modifier (shown as a slider) 704 may allow for user control of the extent to which the height of the text is increased. For another example, a width modifier (shown as a slider) 706 may allow for user control of the extent to which the width of the text is decreased. The maximum height increase may be set based on the dimensions of the display 126. For example, for a 1440 x 2560 pixel display operating in landscape mode, the maximum height increase may be set to 1440 pixels. Indeed, in one embodiment, the maximum height increase may also be the default height increase.

If the keyboard 124 of the computing device 100 is a physical keyboard, rather than a virtual keyboard, there may be specific keys on the left side and the right side of the keyboard that may be used, by the viewer, to cause scrolling.

Responsive to sensing that the viewer has pressed on a left side keyboard key, the microprocessor 128 may arrange scrolling of the passage of height-increased and width-decreased text from the right side 508 toward the left side 506. Similarly, responsive to sensing that the viewer has pressed on a right side keyboard key, the microprocessor 128 may arrange scrolling of the passage of height-increased and width-decreased text from the left side 506 toward the right side 508.

The context of the scrolling of height-increased and width-decreased text across the display 126, as discussed hereinbefore, may be enhanced by a vertical cursor (not shown) on the display 126. The cursor may help to focus a viewer on a particular word on the display. The location of the cursor may be centered on the display by default, but may be configured by the viewer to be closer to the left side 506 or the right side 508 of the computing device 100.

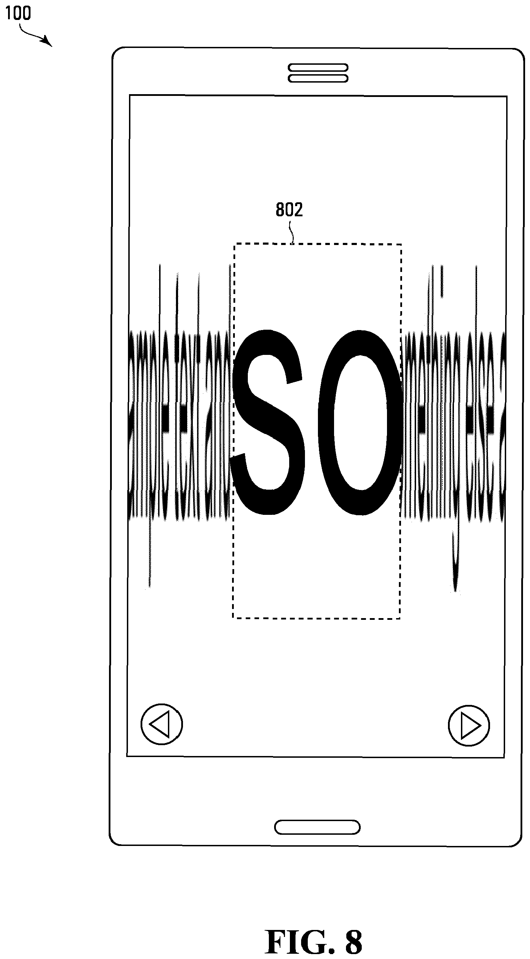

It is contemplated that the amount of width width-decreasing of the text around the cursor may be temporarily decreased as the text scrolls, thereby allowing for enhanced viewer comprehension. FIG. 8 illustrates a magnification region 802. Height-increased and width-decreased text that is actively scrolling across the display 126 may be briefly decompressed (i.e., width-restored) and displayed, under control of the microprocessor 128, in the magnification region 802.

As is conventional, the auxiliary I/O devices 106 may include a device capable of causing the computing device 100 to vibrate. In view of such devices, the scrolling of height-increased and width-decreased text across the display 126, as discussed hereinbefore, may be further enhanced with haptic emphasis. As discussed, a static cursor location on the display 126 may be defined. It is contemplated that, responsive to specific height-increased and width-decreased text being scrolled over the cursor, the microprocessor 128 may trigger one or more of the auxiliary I/O devices 106 to generate vibrations to emphasize the specific text. Notably, such haptic emphasis may be employed to emphasize punctuation.

Consider that text that reads "<viewer's name here>, I'm SO looking forward to seeing you tonight!" has been processed according to aspects of the present application to that the viewer is tilting the computing device 100 to read the text in a height-increased and width-decreased scrolling passage. The manner of reviewing the passage already carries with it an inherent intimacy. Furthermore, the review of the passage, by the viewer, may be enhanced through haptic emphasis of any word expressed in all capital letters ("SO") or through haptic emphasis of any word followed by an exclamation point ("tonight!").

To add further reading obfuscation to unintended viewers, it is proposed to add a patterned screen background over which the height-increased and width-decreased text is to scroll. It is intended that "moire" patterns will be generated as the height-increased and width-decreased text scrolls across the display 126 and that such moire patterns will add further difficulty to attempt, by others, to read of the obfuscated text.

A moire pattern generally comprises a secondary and visually evident superimposed pattern created, for example, when two identical (usually transparent or at least partially transparent) patterns on a flat or curved surface (such as closely spaced straight lines drawn radiating from a point or taking the form of a grid) are overlaid while displaced or rotated a small amount from one another.

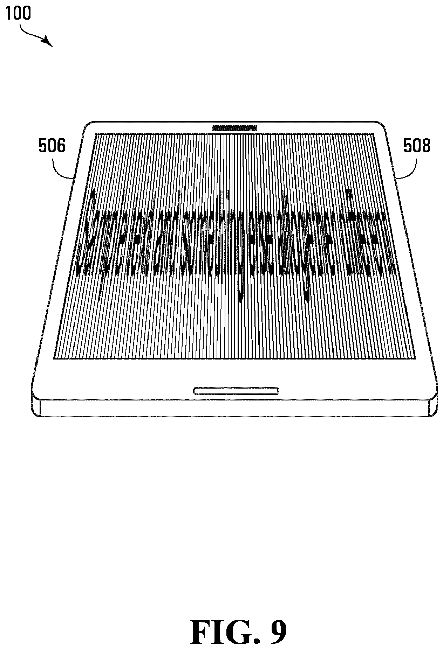

FIG. 9 illustrates the computing device 100 with a pattern of relatively closely spaced parallel lines forming a background on the display 126. Notably, the pattern of parallel lines does not constitute a moire pattern.

Instead, it is expected that, in response to height-increased and width-decreased text being scrolled across the display 126, moire patterns will be generated. To an observer reviewing the display 126 at a non-optimum viewing angle, the moire pattern may be considered to act to further obfuscate the text. For the viewer who reviews the text at a more optimum viewing angle, such as illustrated in FIG. 9, the moire pattern generation may be considered a smaller distraction and so that the viewer can focus on comprehension of the text.

The moire pattern may also be considered to hinder remote capture of the text with a still camera or a video recorder.

In one application, the text obfuscation of the present application may be applied as a mode to view specific content. That is, to open a message (e.g., an email message, a short messaging service message, instant message, peer-to-peer message, data message, or other message) that the viewer expects to be private, the viewer may employ user interface controls to open a menu. The menu may include a menu item related to the obfuscation of text. Upon detecting selection of the menu item, the microprocessor 128 may process the text of the message according to the method illustrated in FIG. 4 and arrange presentation of the text on the display in one of the manners discussed hereinbefore. Rather than the text of a message, the text of a particular webpage, word processing document, or any other file comprising text may also be obfuscated in accordance with aspects of the present application.

In another application, the text obfuscation of the present application may be applied as a medium for communication. That is, a sender of a message may specify, as an attribute of the message, that the receiving device should employ aspects of the present application to obfuscate the text while presenting the text of the message to the intended viewer.

The above-described implementations of the present application are intended to be examples only. Alterations, modifications and variations may be effected to the particular implementations by those skilled in the art without departing from the scope of the application, which is defined by the claims appended hereto.

## Claims

1. A method of obfuscating text, the method comprising:
rasterizing the text, to produce rasterized text having a height and a width;
altering the rasterized text by increasing the height without increasing the width; and
arranging presentation of the altered text on a display.

2. The method of claim 1 wherein altering the rasterized text further comprises decreasing the width.

3. The method of claim 1 or claim 2 wherein the arranging presentation of the altered text comprises scrolling the altered text across the display.

4. The method of claim 2 further comprising sensing a tilting of the display and arranging a direction of the scrolling responsive to the sensing or arranging a rate of the scrolling responsive to the sensing.

5. The method of claim 2 further comprising detecting activation of a user interface component of a computing device communicably coupled to the display; and arranging a direction of the scrolling responsive to the sensing, wherein the user interface component comprises a button presented on the display or a key on a keypad of the computing device.

6. The method of any one of claims 1 to 5 further comprising displaying a background image on the display.

7. The method of claim 6 wherein the background image comprises parallel lines.

8. A computing device comprising:
a memory storing instructions;
a display; and
a processor adapted, by the instructions, to obfuscate text by:
rasterizing the text, to produce rasterized text having a height and a width;
altering the rasterized text by increasing the height without increasing the width; and
arranging presentation of the altered text on the display.

9. The computing device of claim 8 wherein the processor is further adapted to alter the rasterized text by decreasing the width.

10. The computing device of claim 8 or claim 9 wherein the arranging presentation of the altered text further comprises scrolling the altered text across the display.

11. The computing device of claim 9 further comprising a sensor and wherein the processor is further adapted to:
detect communication from the sensor representative of a tilting of the display; and
arrange a direction of the scrolling responsive to the detecting; or
arrange a rate of the scrolling responsive to the sensing.

12. The computing device of any one of claims 8 to 11 wherein the user interface component comprises a button presented on the display of the computing device.

13. The computing device of any one of claims 8 to 11 further comprising a keypad and wherein the user interface component comprises a key on the keypad.

14. The computing device of claim 8 to13 wherein the processor is further adapted to arrange display of a background image on the display.

15. A computer program that, when executed by a processor in a computing device, cause the processor to:
rasterize text to produce rasterized text having a height and a width;
alter the rasterized text by increasing the height without increasing the width; and
arrange presentation of the altered text on a display.
